# EUROPEAN PATENT APPLICATION

(11) **EP 1 279 859 A1**
(43) Date of publication of application: **29.01.2003**
(21) Application number: 01306467.0
(22) Date of filing: 27.07.2001
(51) Int. Cl.: F16G 11/10

(54) **Cord End**

(71) Applicant: YKK Europe Limited, London EC1V 8AN (GB)
(72) Inventor: Murata, Koji c/o YKK Europe Limited, 42327 Wuppertal (DE)
(74) Representative: Luckhurst, Anthony Henry William

(57) **Abstract**

A cord end, comprising a housing (100, 101; 200; 300), a channel within the housing adapted to allow the housing to be threaded onto a cord, and means to fasten the housing to the cord, characterised in that the means to fasten the housing to the cord comprises at least one prong (110; 210; 310) which in use, bites into the cord. Preferably, the prongs (110; 210; 310) project into the channel. In one embodiment, the housing comprises two sections (100, 101) joined by a hinge (105), and held together by elastic means (106). By pressing on a depression (115) on the outer surface of the cord end, the housing may be opened to disengage the prongs (110) from the cord. In another embodiment, the prongs (210; 310) are made from a flexible material, so that they bend to allow the cord to be threaded through the channel, but when the housing is in the required position, the prongs can be straightened to bite into the cord and hold the housing in position.

## Description

The present invention relates to cord ends and cord stoppers, and in particular, to a cord end which bites into the cord by means of spikes or prongs.

Cord ends are used on articles such as an umbrella strap, camera strap, or light pull. The cord end provides a solid grip fixed to the cord, which makes the cord easier to hold and less likely to slip out of a person's hand. Cord ends may also be used with cords in clothing, bags, cases, etc, for example where an opening in the article is closed or partially closed by pulling tight a cord located in a channel around the opening. When the cord it pulled tight, it is held in this position, for example, by knotting its two ends together. However, if one of the ends of the cord is accidentally pulled inside the channel, it becomes very difficult to locate and retrieve it. It will not then be possible to tighten the cord. A cord end provides a barrier to prevent the end of the cord from being pulled into the channel. Cord ends may also fulfil an ornamental function, being brightly coloured or decoratively shaped.

A basic type of cord end is formed from a hollow housing, with an entry hole for the cord at one end, and an exit hole at the other end. A knot on the end of the cord prevents the cord end from sliding off the end of the cord. The exit hole for the cord is commonly larger than the entrance hole, so the knot is located within the hollow housing. The end of the cord may also be located within the hollow housing, which gives it protection and prevents it from fraying.

Some cord ends may be moulded onto the end of a cord.

A cord end which grips a cord by clamping it is described in EP0945646A. The cord end is made of two parts, joined by a hinge, which snap together to enclose an end of the cord. When the parts are snapped together, the cord is held between pairs of toothed ridges which are located on the inner surface of each of the two parts. A large spike on one part passes through the cord, and into a corresponding hole in the other part.

Cord stoppers can have a similar function to cord ends, but additionally can grip the cord in a chosen position along its length, and the chosen position is adjustable during use. The gripping means may be engaged in order to grip the cord, or temporarily released in order to slide the cord stopper to a new position on the cord. When used with a cord which opens or closes an opening in an article, the cord stopper may be slid along the cord until it is located next to the channel entrance. Then, when additional cord is pulled out of the channel and through the body of the cord stopper, the length of cord within the channel will reduce, and the cord will become tighter, pulling the opening closed. Similarly, to re-open the opening, the cord may be fed back through the cord stopper, so that the length of cord inside the channel increases again, and the tension is released.

Cord stoppers are well known to grip a cord by clamping it. For example, a spring loaded tongue may clamp the cord against the inside of housing of the stopper. Means are provided to manually release the pressure of the tongue on the cord, by pushing the tongue away from the inside wall of the housing. The stopper may then be slid along the cord to a new location, and the tongue then allowed to clamp the cord once more. It is still desirable with such a cord stopper to provided a knot or other barrier on the end of the cord, to prevent the cord stopper from being accidentally slid completely off the cord.

The present invention provides a cord end, comprising a housing, a channel through the housing, by means of which the housing can be threaded onto a cord, and means to fasten the housing to the cord, characterised in that the means to fasten the housing to the cord comprises at least one projection which is fixed on the housing, and which in use, bites into the cord to inhibit movement of the housing along the cord.

Preferably, the projections have sharp ends, forming prongs or spikes, and are integral with the housing. Preferably the projections are located either inside the channel or at the entrance to the channel.

Preferred embodiments of the present invention are now described with reference to the following drawings, in which:
Figures 1A-1C show a first embodiment of the invention, and figure 1A is a side perspective view, figure 1B is a top perspective view, and figure 1C is a front perspective view.
Figures 2A-2E show the embodiment of figure 1A, and figure 2A is a bottom view, figure 2B is a side view, figure 2C is a top view, figure 2D is a front view, and figure 2E is a rear view.
Figures 3A-C show a second embodiment of the invention, and figure 2A is a bottom perspective view, figure 3B is a side perspective view, and figure 3C is a top perspective view.
Figures 4A-E show the embodiment of figure 3A, and figure 4A is a bottom view, figure 4B is a side view, figure 4C is a top view, figure 4D is a cross sectional view taken along line A-A of figure 4B, and figure 4E is a more detailed cross sectional view, enlarged from area B of figure 4D.
Figures 5A-C show a third embodiment of the invention, and figure 3A is a top perspective view, figure 5B is a bottom perspective view, and figure 5C is a side perspective view.
Figures 6A-E show the embodiment of figure 5A, and figure 6A is a bottom view, figure 6B is a side view, figure 6C is a top view, figure 6D is a cross sectional view taken along line A-A of figure 6B, and figure 6E is a cross sectional view, enlarged from area B of figure 6D.
Figures 7A-C show the positions of the prongs while the cord end is being threaded onto a cord, and after the cord end has been positioned on the cord.
Figure 8A and 8B show two embodiments of a cord end with a hook.

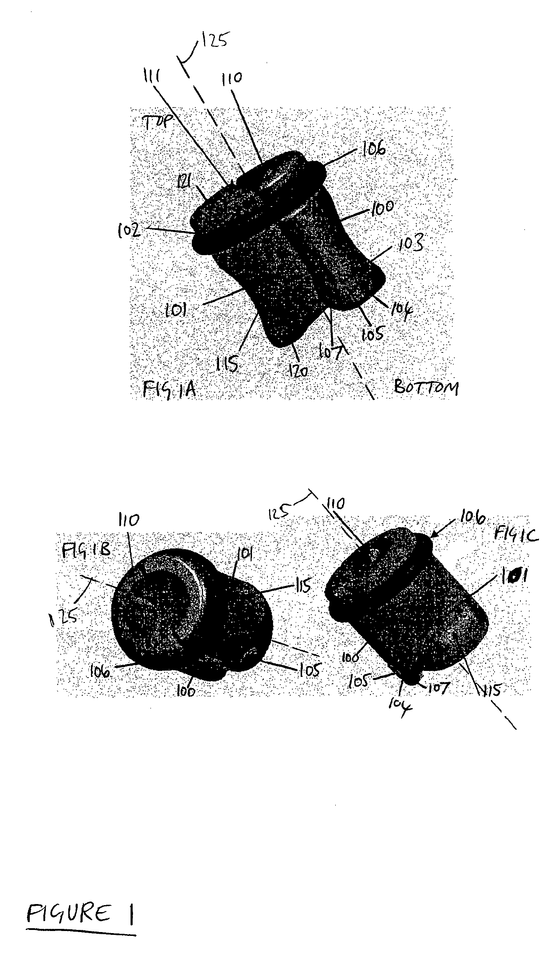

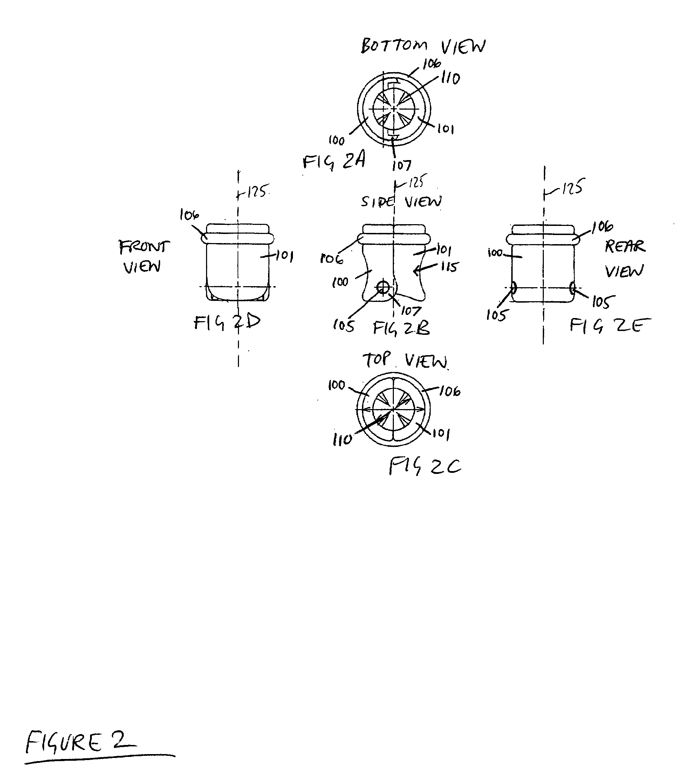

Figures 1A-C and 2A-E show a first embodiment of the invention. Figures 1A-C show side, top and front perspective views. Figures 2A-E show side, front, rear, top and bottom views. These orientations are only relative, and are not intended to constrain the cord end to being in a particular orientation with respect to the article when in use.

The cord end housing is constructed from two separate body sections, a rear section 100 and a front section 101. The two sections fit together to form a hollow tube-like structure, which has a central axis 125 running along its length. A plurality of prongs 110 are located on the inner surface of the body. In this embodiment, there are four prongs, evenly spaced around an inner circumference, towards the top end 121 of the body. Each prong 110 has a conical shape, and is set at an angle of 90 degrees to the axis of the cord end. The cord enters the housing at the top end 121, i.e. the end with the prongs. The cord may leave by the bottom end 120 of the housing, or alternatively, the end of the cord may be positioned within the housing. The prongs 110 bite into the cord, and therefore prevent the cord end from sliding off the cord.

The rear body section 100 has two holes 104 located in its bottom end 120, and the front body section 101 has two corresponding projections 103. When the two body sections 100, 101 are fitted together, they form an overlap 107 at the bottom end, and the holes 104 engage with the projections 103 to form a hinge 105. It can be seen from figure 2A that the walls of both body sections are thinner at the base, in the region of the hinge 105, to allow the two sections to overlap in this location. There is no overlap at the top end 121 of the cord end, although the two body sections 100, 101 abut one another. The top end 121 of the body is free to open and close by rotating one of the body sections around the hinge 105. The body sections 100, 101 have a circumferential groove in their outer surface at their top end, and an elastic O-ring 106, is located within the groove. The O-ring 106 provides a closing force, which forces the prongs 110 to bite into the cord.

The second body section is provided with a depression 115 on the bottom end of its outer surface. When the cord end is being installed on the cord, a force may be applied by a person's finger to the depression 115, so that the hinge will open, and the prongs separate against the elastic force of the O-ring 106. The cord end may then be slid along the cord to the desired position. When the force is released from the depression 115, the O-ring 106 provides a closing force to the hinge 105, and as the hinge 105 closes, the prongs 110 will bite into the cord, securing the cord end in position. Alternatively, the O-ring 106 could be removed, allowing the cord end body to be clamped in place by hand (or machine), and then the O-ring 106 replaced to hold the body parts together.

Although the cord end will usually be used in a fixed position on the cord, the position could be adjusted by a user if desired.

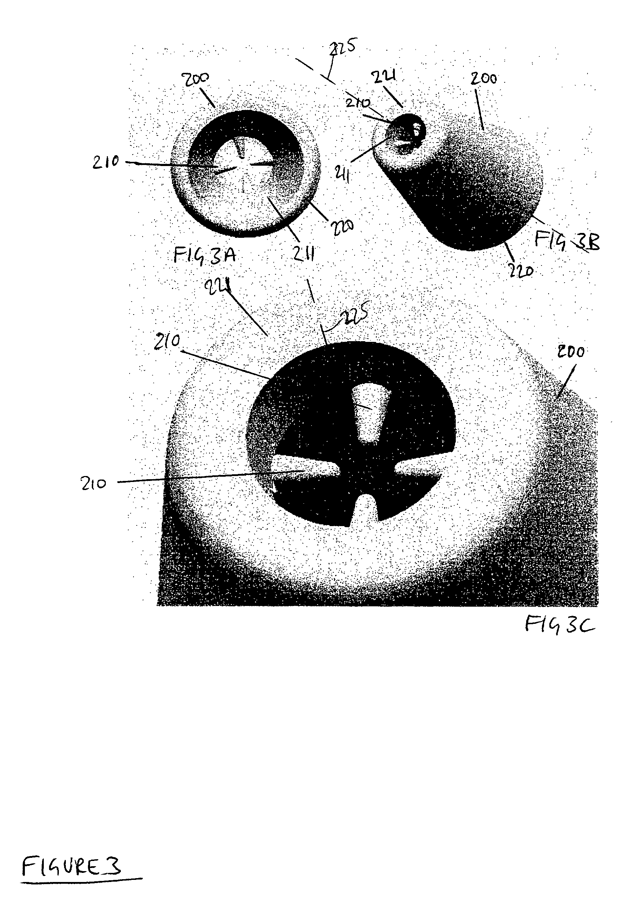

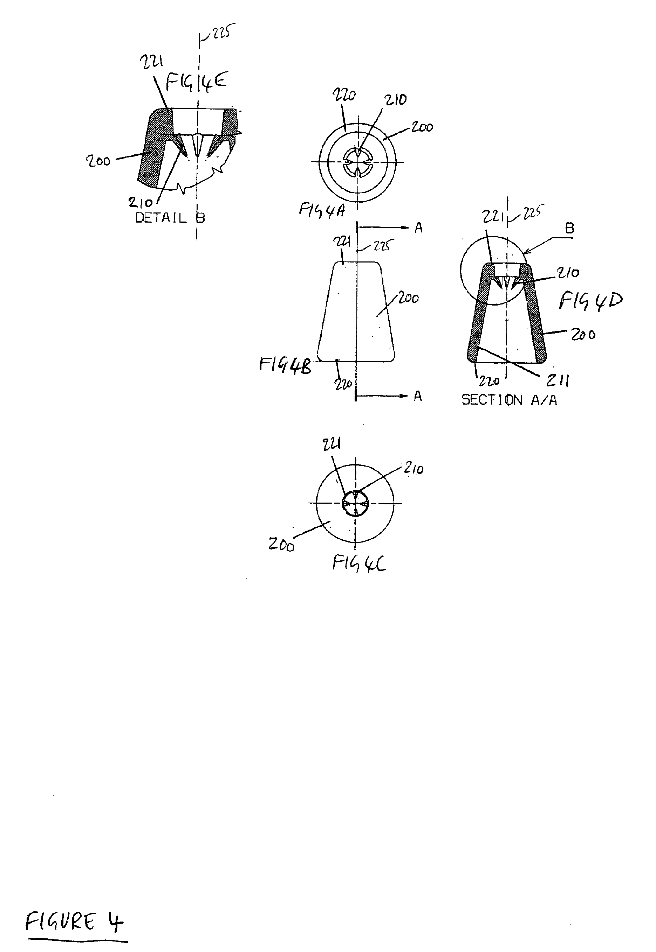

Figures 3A-C and 4A-E show a second embodiment of the invention. Figures 3A-C show bottom, side and top perspective views, and figures 4A-E shows side, top and bottom views, with a cross section A-A along the length of the cord end, and an enlarged part of this cross section. In this embodiment, the cord end is made of a single body section 200, in the shape of a truncated hollow cone. The outer walls slope from a narrow end at the top 221 of the cord end, towards a wider end at the bottom 220. Four prongs 210 are located on the interior surface 211 of the top end 221, and the prongs 210 are angled towards the wide bottom end 220 of the body section. The preferred range of angles is between 20° and 90° to the axis 225 of the cord end. The prongs 210 may be integral to the body section.

Again, the cord enters the cord end at the top end 221, and may either leave at the bottom end 220, or the end of the cord may be retained within the body section 200. The cord end is installed on a cord by threading the cord through the gap in the top end 221, until the cord end is on the required position along the cord. The prongs 210 are preferably made of a slightly flexible material, and during this process, they will bend towards the bottom end 220 of the body section 200, allowing the cord to be pulled through. When the cord end is in position, the cord may be pulled slightly in the opposite direction, causing the prongs to dig into the cord, and hold the cord end in place. To allow the cord end to be threaded onto the cord more easily, the prongs 210 are angled away from the top end 221 of the cord end. Thus, it is easy to thread the cord in a downward direction during installation of the cord end, but pulling it in the other direction causes the cord end to become fixed on the cord. Again, the cord end is typically left in a fixed position, but it may be slid further along the cord by pulling the cord in the direction from the top end to release it from the prongs, and then reversing the pull slightly when the cord end is in the desired position.

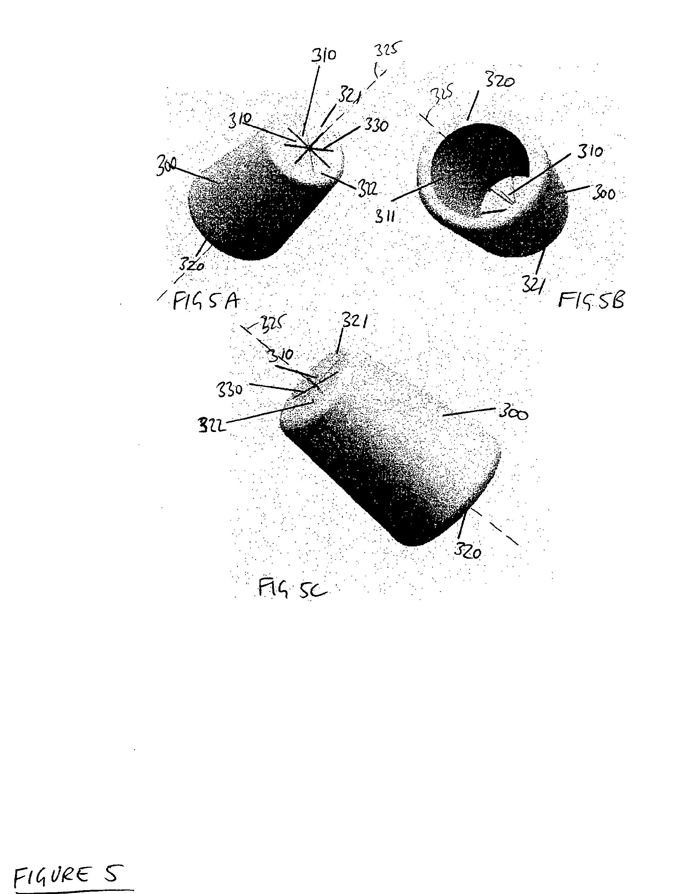

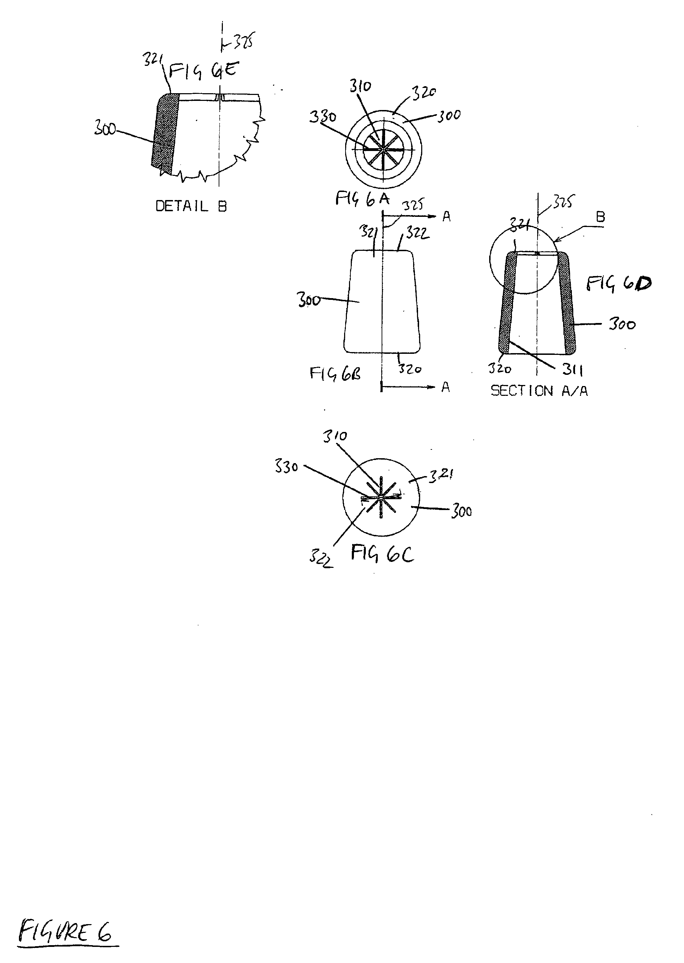

Figures 5A-C and figures 6A-E show a third embodiment of the invention. Figures 5A-C show top, bottom and side perspective views, and figures 6A-E show top, bottom and side views, a cross section A-A along the length of the cord end, and a more detailed view of part of the cross section area. The general shape of the body 300 is a similar hollow truncated cone shape to that of the second embodiment, but capped by a flat top surface 322. Instead of internal prongs, the cord end now has a plurality of intersecting slits 330 in its top surface 322, and the slits 330 effectively divide the top surface 322 into spikes 310 which engage the cord in a similar manner to the prongs of the second embodiment, fixing the body 300 to the cord. The top surface 322 has four overlapping slits 330, each aligned at 45 degrees to its neighbour, and together forming an 8-pointed star shaped pattern. Other configurations of slit are also possible, such as a 6-pointed star. The cord enters the body section through the star shaped slits 330 at the top 321, and may either exit through the bottom end 320 of the body section, or may have its end retained within the body section. Again, the cord end is preferably made of a plastics material, such that the spikes on the top surface are slightly flexible. The spikes will deform and then bite into the cord, and hold the cord end in position, even if a low degree of force is applied to the cord. This design is useful to a wide range of cord diameters, the spikes deforming more to accommodate larger diameter cords. Again the cord end may be moved along the cord in one direction if desired, as for the second embodiment described above.

Figures 7A-C show the positions of the prongs while the cord end is being threaded onto a cord, and after the cord end has been positioned on the cord. Figures 7A-C apply to the prongs of the cord end in the second embodiment. Although the prongs are of a different shape, a similar type of deformation of the prongs occurs in the third embodiment. The prongs may be more rigid in the first embodiment, and are not required to deform.

In figure 7A, a cord end 400 is shown just before it is threaded onto a cord 430. The prongs 410 of the cord end 400 are at an angle of between 20° and 90° to the axis 425 of the cord end, and point in a downward direction, away from the top 421 of the cord end.

In figure 7B, the cord 430 is shown partly inserted into the cord end 400. The only force applied to the cord relative to the cord end so far is a downward force 431. The prongs 410 deform in a downwards direction as the cord 430 is pulled into the interior 411 of the cord end.

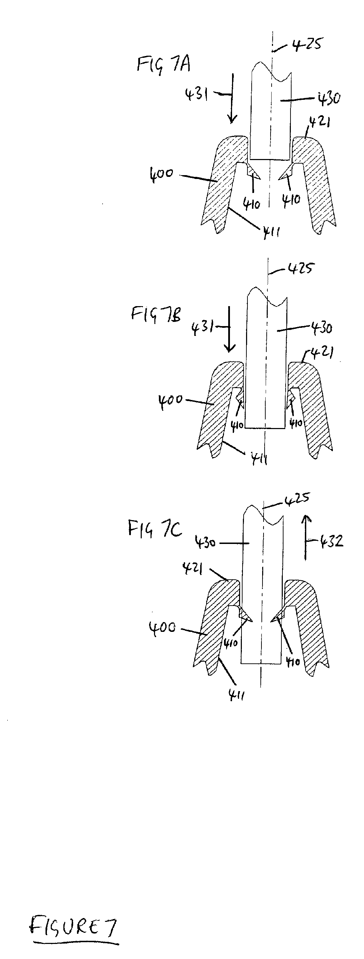

When the cord end 400 is in the desired position along the cord 430, a small upward force 432 is applied to the cord 430, as shown in figure 7C. This upward force 432 causes the prongs 410 to bend upwards again, hence becoming engaged in the cord 430. Once the prongs 410 have become engaged in the cord 430, any further force pulling either upwards or downwards on the cord will be resisted, due to the fact that the cord 430 now holds the prongs 410 in place.

Preferably, the type of cord used is an elastic woven cord.

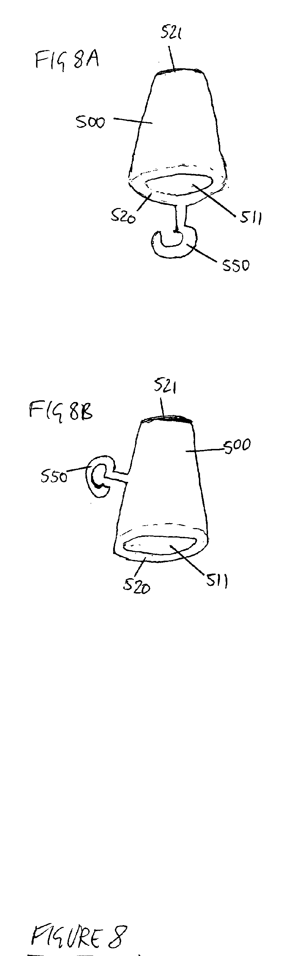

Figure 8A and 8B show two embodiments of a cord end 500 with a hook 550. The hook 550 may be used for hanging the cord, to prevent it trailing. For example, on a bag or case, the cord end 500 may be hooked or clipped to the body of the bag or case. A hook 550 may be used with any type of cord end. It may be integral with the cord end, or be a separate attachment. It may be fastened to the bottom rim 520 of the cord end, as shown in figure 8A, or to the side of the cord end, as shown in figure 8B. Other possibilities exist, such as it being attached to the top 521 of the cord end, or even depending from the interior surface 511, and protruding through the top or bottom opening.

The hook may be an open hook, or may even be a clip. A further possibility is that the hook is a closed hook with engages with a clip on the article onto which it is to be hooked.

## Claims

**1.** A cord end, comprising a housing, a through channel in the housing, by means of which the housing can be threaded onto a cord, and means to fasten the housing to the cord, **characterised in that** the means to fasten the housing to the cord comprises at least one projection which is fixed to the housing, and which in use, bites into the cord to inhibit movement of the housing along the cord.

**2.** A cord end, as claimed in claim 1, wherein the projection has a sharp pointed end.

**3.** A cord end, as claimed in claim 1 or claim 2, adapted such that the projection is movable between a first position and a second position, such that in the first position, the projection does not impede the cord from sliding within the channel, and in the second position, the projection bites into the cord.

**4.** A cord end, as claimed in claim 3, wherein the housing comprises two parts which are joined by a hinge, the housing is openable by means of the hinge, and the cord end further comprises means to keep the housing closed when in use.

**5.** A cord end, as claimed in claim 4, wherein the means to keep the housing closed comprises elastic means.

**6.** A cord end, as claimed in claim 5, wherein the elastic means is an elastic O-ring.

**7.** A cord end, as claimed in claim 6, wherein the housing is shaped with a depression on its outer surface to which a force can be applied to open the hinge, thereby moving one part of the housing relative to the other to move the projection to said first position, and the force can be released to allow the elastic means to close the hinge, thereby moving the projection to said second position.

**8.** A cord end, as claimed in claim 1 or claim 2, wherein the projection is made from a flexible material, such that the projection is resiliently deformable.

**9.** A cord end, as claimed in any one of the previous claims, **characterised in that** the projection projects from the inner surface of the channel.

**10.** A cord end, as claimed in any one of the previous claims, **characterised in that** the channel comprises an entry hole for the cord at one end, and an exit hole for the cord at the other end.

**10.** A cord end, as claimed in claim 9, **characterised in that** the exit hole is larger than the entry hole, and the channel at the exit end is wider that the channel at the entry end.

**11.** A cord end, as claimed in claim 9 or 10, **characterised in that** the projection is located around the entrance to the channel, and project inwards towards the central axis of the channel.

**12.** A cord end, as claimed in claim 1, wherein the projection is angled at 90 degrees to the central axis of the channel.

**13.** A cord end, as claimed in claim 1, wherein the projection is angled at between 20 degrees and 90 degrees to the central axis of the channel.

**14.** A cord end, as claimed in any one of the previous claims, **characterised by** comprising four projections.

**15.** A cord end, as claimed in any of the preceding claims, **characterised in that** the channel has a circular inner cross section normal to the axis along which the cord runs, and the projections are evenly spaced around an inner circumference of the channel, the inner circumference being located towards the entry end of the housing.

**16.** A cord end, as claimed in any one of the previous claims, wherein the projections are integral with the housing.

**17.** A cord end, comprising a housing formed from two parts joined by a hinge, fastening means for holding the hinge closed and the two parts together, a channel within the housing into which a cord can be positioned, and means to fasten the housing to the cord, wherein the means for fastening the housing to the cord comprises at least one projection which in use, bites into the cord, and wherein the housing is fastened to the cord by positioning the cord in the channel, closing the hinge, and fastening the fastening means, **characterised in that** the fastening means comprises elastic means which holds the two parts of the housing together.

**18.** A cord end as claimed in any one of the preceding claims, further comprising a hook.
